# EUROPÄISCHE PATENTSCHRIFT

(11) **EP 3 404 364 B1**
(45) Veröffentlichungstag und Bekanntmachung des Hinweises auf die Patenterteilung: **18.03.2020**
(21) Anmeldenummer: 18170611.0
(22) Anmeldetag: 03.05.2018
(51) Int. Cl.: G01C 21/00, G01C 21/16, G01C 23/00, F41G 7/00

(54) **VERFAHREN ZUM SCHÄTZEN EINES ZUSTANDS EINER MOBILEN PLATTFORM**
METHOD FOR ESTIMATING A CONDITION OF A MOBILE PLATFORM
PROCÉDÉ D'ESTIMATION D'UN ÉTAT D'UNE PLATEFORME MOBILE

(30) Priorität: 16.05.2017 DE 102017110652; 21.09.2017 DE 102017121950
(43) Veröffentlichungstag der Anmeldung: 21.11.2018
(73) Patentinhaber: Airbus Defence and Space GmbH, 82024 Taufkirchen (DE)
(72) Erfinder: LOHMILLER, Winfried, 85354 Freising (DE); GÖTTKEN, Matthias, 85413 Hörgertshausen (DE)
(74) Vertreter: LKGLOBAL Lorenz & Kopf PartG mbB Patentanwälte

(56) Entgegenhaltungen:
- DE-A1- 2 801 045

## Beschreibung

### Gebiet der Erfindung

Die Anmeldung betrifft ein Verfahren zum Ermitteln eines Zustands einer beweglichen Plattform bezüglich einer Referenzfläche, eine Zustandsermittlungseinheit für eine mobile Plattform, welche das genannte Verfahren implementiert, sowie eine mobile Plattform mit einer solchen Zustandsermittlungseinheit.

### Technischer Hintergrund

Insbesondere in der Luftfahrt kann es von großer Bedeutung sein, eine Position oder allgemeiner einen Zustand eines Luftfahrzeugs (allgemein: einer mobilen Plattform) mit Bezug zu der ersten Oberfläche zu ermitteln und eine Fortentwicklung dieses Zustands zu propagieren. Hierzu wird üblicherweise eine Abbildung des überflogenen Geländes genutzt sowie Messergebnisse von Sensoren an Bord des Luftfahrzeugs. Beispielsweise kann die sogenannte Geländereferenznavigation (terrain reference navigation, TRN), welche ein geländedatengestütztes Navigationsverfahren ist, genutzt werden. Eine zweidimensionale oder dreidimensionale Navigationslösung wird durch den Vergleich zwischen dem überflogenen Gelände und einem an Bord des Luftfahrzeugs mitgeführten digitalen Geländemodell bestimmt. Ein Sensor (beispielsweise ein Radarhöhenmesser) tastet das überflogene Gelände ab und ermittelt ein Profil des Geländes sowie einen Abstand zwischen dem Luftfahrzeug und dem Gelände.

DE 28 01 045 A1 beschreibt ein Navigationsgerät, welches Navigationskoppeltechnik verwendet, um in Verbindung mit einer Koppelkursleitung eine Standortkorrektur für ein koppelkursgeleitetes Fahrzeug vorzunehmen.

### Zusammenfassung

Es kann als Aufgabe der Erfindung betrachtet werden, ein Verfahren zum Ermitteln eines Zustands einer beweglichen Plattform anzugeben, welches sich durch eine erhöhte Genauigkeit des ermittelten Zustands auszeichnet.

Gemäß einem ersten Aspekt ist ein Verfahren zum Ermitteln eines Zustands einer beweglichen Plattform bezüglich einer Referenzfläche angegeben. Das Verfahren weist die folgenden Schritte auf: Erfassen eines ersten Abstandswertes zwischen der beweglichen Plattform und der Referenzfläche, wobei der erste Abstandswert der geringste Abstand zwischen der beweglichen Plattform und der Referenzfläche ist; Ermitteln eines zweiten Abstandswertes zwischen der beweglichen Plattform und der Referenzfläche basierend auf einem Modell der Referenzfläche und einer Position der beweglichen Plattform relativ zu der Referenzfläche, wobei der zweite Abstandwert den geringsten Abstand zwischen der Referenzfläche und der beweglichen Plattform aufweist; Bestimmen einer Differenz zwischen dem ersten Abstandswert und dem zweiten Abstandswert; Verwenden der Differenz als Residuum und Bewerten des Residuums, um eine Abbildung eines Zustands der beweglichen Plattform an den Zustand der beweglichen Plattform anzugleichen; Ermitteln eines Referenzpunktes der Referenzfläche in dem Modell der Referenzfläche basierend auf der Position der beweglichen Plattform bezüglich des Modells der Referenzfläche, wobei der Referenzpunkt von der beweglichen Plattform den geringsten Abstand zwischen der Referenzfläche und der beweglichen Plattform aufweist; Bestimmen einer Tangentialebene, welche an dem Referenzpunkt anliegt, so dass eine Verbindungslinie zwischen der beweglichen Plattform und dem Referenzpunkt die Tangentialebene senkrecht schneidet.

Die bewegliche Plattform kann insbesondere ein Luftfahrzeug, aber auch ein Wasserfahrzeug sein und kann auch als mobile Plattform bezeichnet werden. Im Zusammenhang mit der Beschreibung werden diese Begriffe als Synonyme verstanden.

Das Erfassen des ersten Abstandswertes kann beispielsweise mit einer Radaranlage an Bord des Luftfahrzeugs oder mit einem anderen Sensor erfolgen. Der zweite Abstandswert wird basierend auf einem Modell oder einer Abbildung der Referenzfläche (insbesondere der Erdoberfläche) und einer Position der mobilen Plattform mit Bezug zu dem Modell der Referenzfläche ermittelt. Anschließend wird die Differenz zwischen dem erfassten Abstandswert und dem ermittelten Abstandswert bestimmt. Sodann wird diese Differenz verwendet, um eine Abbildung, insbesondere eine mathematische Abbildung, des Zustands der mobilen Plattform an einen realen bzw. tatsächlichen Zustand der mobilen Plattform anzugleichen.

Das Angleichen der Abbildung des Zustands der mobilen Plattform an den tatsächlichen Zustand erfolgt mit dem Ziel, dass Abbildung und Realität parallel laufen, beispielsweise weil die Abbildung der Realität fehlerbehaftet sein kann und einer Korrektur bedarf. Dieses Angleichen erfolgt beispielsweise mittels eines Kalman-Filters, wobei der abgebildete Zustand dem realen Zustand über die Bewertung eines Residuums für das Kalman-Filter nachgeführt wird. Es wird darauf hingewiesen, dass ein Kalman-Filter nicht zwingend verwendet werden muss. Vielmehr können auch andere Verfahren, welche eine Geländereferenznavigation nutzen, zum Einsatz kommen.

Ein Kalman-Filter implementiert ein Verfahren zum Lösen nichtlinearer Schätzprobleme und kann auch als Minimum-Varianz-Schätzer bezeichnet werden. Um eine (mathematische) Abbildung der Realität nachführen zu können, benötigt das Kalman-Filter ein sogenanntes Residuum. Um dieses Residuum zu bestimmen, wird der erfasste erste Abstandswert mit dem bestimmten zweiten Abstandswert verglichen.

Das Kalman-Filter kann grundsätzlich genutzt werden, um einen Bewegungsablauf der beweglichen Plattform zu verfolgen und Prognosen bzw. Schätzungen über den Bewegungsablauf (beispielsweise relativ zu der Referenzfläche) für die Zukunft abzugeben. Typischerweise gibt ein Kalman-Filter eine Prognose über die Entwicklung des Abstands zwischen beweglicher Plattform und Referenzfläche aus, und zwar basierend auf historischen Daten, also dem bisherigen Bewegungsablauf bzw. Abstand zwischen beweglicher Plattform und Referenzfläche.

Wird für das Erfassen des ersten Abstandswertes ein Radarsystem verwendet, entspricht der erfasste erste Abstandswert bedingt durch die Signalverarbeitung in einem Radarsystem bzw. einem Radarhöhenmesser der kürzesten Entfernung zwischen dem Radarsystem (bzw. dem das Radarsystem enthaltenden Luftfahrzeug) und der Geländeoberfläche. Im Gegensatz dazu entspricht der bestimmte bzw. ermittelte zweite Abstandswert dem vertikalen Abstand zwischen der mobilen Plattform und der Geländeoberfläche in dem Geländemodell bzw. in der Abbildung der Referenzfläche.

Es wurde erkannt, dass bei dem Bestimmen des Residuums ein Vergleich der kürzesten Entfernung zwischen Luftfahrzeug und Geländeoberfläche (der erfasste erste Abstandswert) mit dem vertikalen Abstand zwischen Luftfahrzeug und Abbildung der Geländeoberfläche (der bestimmte zweite Abstandswert) zu einer Ungenauigkeit führen kann. Dies ist vor allem dann der Fall, wenn der Punkt der Geländeoberfläche mit dem kürzesten Abstand zu dem Luftfahrzeug sowie der Punkt vertikal unter dem Luftfahrzeug nicht identisch sind. In diesem Fall kann ein Vergleich zwischen dem ersten Abstandswert und dem zweiten Abstandswert in einem Residuum resultieren, welches die Abweichung zwischen der Abbildung der Realität und der Realität größer sein lässt, als sie tatsächlich ist. Der Vollständigkeit halber wird auf einen Sonderfall hingewiesen, in welchem der kürzeste Abstand auch der vertikalen Höhe des Luftfahrzeugs über Grund entspricht: dies ist dann der Fall, wenn das Luftfahrzeug ein flaches, horizontales Gelände überfliegt. Bei allen anderen Geländeformen ist diese Beziehung nicht zwingend gegeben.

Basierend auf dieser Erkenntnis wird vorgeschlagen, für die Bestimmung des Residuums als zweiten Abstandswert nicht die vertikale Höhe des Luftfahrzeugs mit Bezug zu der Geländeoberfläche in dem Geländemodell zu wählen, sondern stattdessen die kürzeste Entfernung zwischen dem Luftfahrzeug und der Gelände Oberfläche in dem Geländemodell zu bestimmen und diese kürzeste Entfernung, welche unter Zugrundelegung des Geländemodells bestimmt wurde, mit dem erfassten ersten Abstandswert zu vergleichen, um das Residuum zu bestimmen.

Gemäß der Erfindung ist vorgesehen, dass das Verfahren weiterhin den folgenden Schritt aufweist: Ermitteln eines Referenzpunktes der Referenzfläche in dem Modell der Referenzfläche basierend auf der Position der beweglichen Plattform bezüglich des Modells der Referenzfläche, wobei der Referenzpunkt von der beweglichen Plattform den geringsten Abstand zwischen der Referenzfläche und der beweglichen Plattform aufweist.

In anderen Worten besagt dieser Schritt des Verfahrens, dass an Stelle der vertikalen Höhe der beweglichen Plattform über der Referenzfläche der Abstand zu demjenigen Punkt der Referenzfläche ermittelt wird, welcher der beweglichen Plattform räumlich am nächsten liegt, also unter Zugrundelegung der Information über den Geländeverlauf in einem dreidimensionalen Koordinatensystem der Abbildung des Geländes (des Geländemodells). Dadurch wird ein systematischer Fehler bei der Bestimmung des Residuums vermieden und es werden nicht Abstände zu unterschiedlichen Punkten auf der Geländeoberfläche miteinander verglichen, sondern sowohl der von dem Radarsystem erfasste Abstand als auch der in dem Geländemodell bestimmte Abstand beziehen sich auf denjenigen Punkt, welcher dem Luftfahrzeug am nächsten liegt. Gemäß der Erfindung weist das Verfahren weiterhin den folgenden Schritt auf: Bestimmen einer Tangentialebene, welche an dem Referenzpunkt anliegt, so dass eine Verbindungslinie zwischen der beweglichen Plattform und dem Referenzpunkt die Tangentialebene senkrecht schneidet.

Durch dieses Vorgehen wird die Tangentialebene als Näherung für die Oberfläche der Referenzfläche bereitgestellt, und zwar ausgehend von dem Referenzpunkt. In anderen Worten erfolgt eine Linearisierung der Referenzfläche. Mit dieser Linearisierung kann das Verfahren einfacher bzw. überhaupt durchgeführt werden. Dadurch, dass die Verbindungslinie senkrecht auf der Tangentialebene steht, entspricht die Verbindungslinie auch einer direkten Sichtlinie ausgehend von dem Sensor/der Radaranlage (die Begriffe Sensor und Radaranlage werden hierin synonym verwendet) zu dem Referenzpunkt, welcher dem Sensor am nächsten liegt.

Die Radaranlage zeichnet sich durch eine bestimmte Keulenbreite aus und hat einen entsprechend begrenzten Suchwinkelbereich. Der von der Radaranlage ermittelte nächstliegende Punkt der Referenzfläche mit Bezug zu der mobilen Plattform liegt stets innerhalb des Suchwinkelbereichs. Die Größe des Suchwinkelbereichs kann in Abhängigkeit des Abstands zwischen der mobilen Plattform und der Referenzfläche variieren. Jedenfalls ist es ausreichend, die Größe der Tangentialebene in dem Geländemodell so zu bemessen, dass sie dem Suchwinkelbereich der Radaranlage auf der realen Erdoberfläche entspricht. Der Grund hierfür ist, dass eine Linearisierung des Geländes außerhalb des Suchwinkelbereichs schlicht nicht erforderlich ist.

In anderen Worten wird die Tangentialebene innerhalb des Suchwinkelbereichs des Radars verwendet. Dieser Bereich der Tangentialebene wird als Tangentialfläche bezeichnet und hat eine Ausdehnung bzw. Größe, die u.a. abhängig ist von der Radargeometrie/Radarkeule, Flughöhe, Geländeverlauf. Die Tangentialfläche ist damit in etwa so groß wie der Suchwinkelbereich des Radars, bevorzugt mindestens so groß wie der Suchwinkelbereich des Radars, weiter bevorzugt genau so groß wie der Suchwinkelbereich des Radars.

Ein Kalman-Filter kann verwendet werden, um basierend auf der Tangentialebene eine Entwicklung des Abstands zwischen der beweglichen Plattform und der Referenzfläche zu schätzen. Eine solche Schätzung ist aber eher verlässlich, wenn ein Abstand zwischen der Tangentialebene und der Referenzfläche nicht zu groß wird, d.h. einen diesbezüglichen Schwellwert nicht überschreitet oder, allgemein gesagt, die Tangentialebene nicht zu stark von der Referenzfläche abweicht.

Gemäß einer weiteren Ausführungsform weist das Verfahren weiterhin den folgenden Schritt auf: Vergleichen der Tangentialebene mit dem Modell der Referenzenfläche in einem vorgegebenen Bereich des Modells der Referenzfläche.

In anderen Worten wird die Tangentialebene mit demjenigen Geländebereich (Teil des Modells der Referenzfläche) verglichen, welcher dem Suchwinkelbereich des Radars oder einem Teil hiervon entspricht. Im Umkehrschluss bedeutet dies, dass Abweichungen der Tangentialebene von dem Modell der Referenzfläche außerhalb des vorgegebenen Geländebereichs für diesen Vergleich nicht berücksichtigt werden oder nicht berücksichtigt werden müssen.

Die Tangentialebene wird mit dem Modell der Referenzfläche verglichen, um die Genauigkeit der Linearisierung (also der vereinfachten Abbildung der Referenzfläche als Ebene) für verschiedene Bereiche der Referenzfläche zu bestimmen, so dass bestimmt werden kann, in welchen Geländebereichen zuverlässig mit der Tangentialebene als Linearisierung gearbeitet werden kann.

Gemäß einer weiteren Ausführungsform weist das Verfahren weiterhin den folgenden Schritt auf: Bestimmen jeweils eines Abweichungswertes zwischen dem Modell der Referenzfläche und der Tangentialebene für jeden Punkt einer Vielzahl von vorgegebenen Punkten in dem Modell der Referenzfläche.

Bevorzugt liegt die Referenzfläche als diskretes Geländemodell vor und weist eine Vielzahl von Geländepunkten mit zugehörigen Daten (Koordinaten der Geländepunkte in einem Koordinatensystem des Geländemodells, sowie weitere Eigenschaften des Geländes, die den Geländepunkten zugeordnet sind) auf. Diese Punkte werden genutzt, um einen Abstand zwischen dem Geländemodell und der Tangentialebene zu bestimmen.

Gemäß einer weiteren Ausführungsform weist das Verfahren weiterhin den folgenden Schritt auf: Bestimmen der Anzahl von Abweichungswerten zwischen dem Modell der Referenzfläche und der Tangentialebene, die einen vorgegebenen Abweichungsschwellwert überschreiten; und Verwerfen des erfassten ersten Abstandswertes, wenn die Anzahl der Abweichungswerte, die den vorgegebenen Abweichungsschwellwert übersteigen, einen vorgegebenen Schwellwert für diese Anzahl übersteigt.

Diese Ausführungsform ermöglicht es, die Geländerauheit bzw. die Nichtlinearität des Geländes (Ondulation) zu bestimmen. Übersteigt die Nichtlinearität ein gewisses Maß, wird der erfasste erste Abstandswert nicht verwendet, weil das Gelände innerhalb des Suchwinkelbereichs zu stark von dem linearen Geländemodell (der Tangentialebene) abweicht. Der Grund hierfür liegt unter anderem darin, dass in einem sehr rauen Gelände nicht immer eindeutig bestimmt werden kann, welches der nächstliegende Punkt ist, welchen die Radaranlage erfasst hat. Hauptsächlich liegt dies an Toleranzen und Messungenauigkeiten der Radaranlage. Ausgehend hiervon könnte eine Ungenauigkeit in das Verfahren eingebracht werden, weil der mittels der Radaranlage erfasste Abstand unerwünscht stark von dem mittels des Geländemodells bestimmten Abstand zum nächstliegenden Punkt der Geländeoberfläche zu der mobilen Plattform abweichen könnte.

Gemäß einer weiteren Ausführungsform werden die genannten Schritte in einem sich wiederholenden Vorgang ausgeführt, solange die bewegliche Plattform in Bewegung ist.

In anderen Worten wird das Verfahren von einer Rechenanlage unter Rückgriff auf die notwendigen Daten ausgeführt und die Schritte des Verfahrens wiederholen sich, so dass der Zustand der mobilen Plattform immer neu bestimmt wird.

Gemäß einer weiteren Ausführungsform wird der erste Abstandswert zwischen der beweglichen Plattform und der Referenzfläche mittels einer Radaranlage erfasst.

Gemäß einer weiteren Ausführungsform ist die bewegliche Plattform ein Luftfahrzeug, und die Referenzfläche entspricht der Erdoberfläche, und das Modell der Referenzfläche ist eine Geländedatenbank.

Mittels einer Radaranlage an Bord des Luftfahrzeugs wird der Abstand zu der Erdoberfläche erfasst. Zusätzlich wird die Position des Luftfahrzeugs mit Bezug zu der Erdoberfläche ermittelt, beispielsweise mittels eines Navigationssystems, wie beispielsweise ein satellitengestütztes Navigationssystem. Die ermittelte Position des Luftfahrzeugs wird in Koordinatenwerte einer Abbildung der Erdoberfläche bzw. eines Modells der Erdoberfläche (z.B. eine Geländedatenbank) umgerechnet. Mit Hilfe dieser Koordinatenwerte kann in dem Modell der Erdoberfläche ermittelt werden, welcher Punkt der Erdoberfläche (in dem Modell) der Position des Luftfahrzeugs am nächsten kommt. Der mittels der Radaranlage erfasste Abstand sowie der mittels des Modells ermittelte Abstand werden miteinander verglichen und die Differenz wird als Residuum für ein Kalman-Filter verwendet, um den Zustand des Luftfahrzeugs zu ermitteln bzw. zu überwachen.

Aspekte des hierin beschriebenen Verfahrens und Überlegungen, auf denen das Verfahren basiert, können wie folgt zusammengefasst werden:
Die Fehlerkovarianzrechnung erfolgt im Kalman-Filter mit dem um den Arbeitspunkt linearisierten Fehlermodell. Die Minimierung der Fehlerkovarianzmatrix führt dann zu der gesuchten zeitvarianten optimalen Filterverstärkungsmatrix, die sowohl zur Korrektur Fehlerkovarianzmatrix als auch zur Korrektur des Navigationszustandsvektors verwendet wird. In anderen Worten wird der Zustand der Plattform in dem Modell in Abhängigkeit der erfassten physikalischen Messerwerte überprüft und bei Bedarf korrigiert bzw. nachgeführt.

Die Verwendung eines Kalman-Filter-Verfahrens verlangt eine lineare Systemdynamik und Messgleichung neben einem zentrierten und gaußverteilten System- bzw. Messrauschen. Eventuelle Nichtlinearitäten in der Systemdynamik oder in der Messgleichung können immer zu einer Verschlechterung der erwarteten Genauigkeit führen und können ein Integritätsproblem darstellen.

Für die Nutzung des Kalman-Filter-Verfahrens ist es notwendig, das nicht lineare Höhenmodell der Erdoberfläche (also die Referenzfläche) im Arbeitspunkt durch ein linearisiertes Modell zu substituieren. Dies erfolgt dadurch, dass eine Tangentialebene, welche an dem Referenzpunkt (auch: Berührpunkt) anliegt, ermittelt wird.

Der Berührungspunkt, der die kürzeste Distanz zwischen Luftfahrzeug und Geländeoberfläche anzeigt, bildet den Arbeitspunkt. Das linearisierte Modell der Erdoberfläche (die Tangentialebene) wird mathematisch durch eine Ebenengleichung beschrieben, die eine Ebene definiert, die im Arbeitspunkt tangential an der Erdoberfläche anliegt.

Das Verfahren bestimmt die Differenz des nichtlinearen Geländemodells und der Tangentialebene (die Abweichung der Tangentialebene von dem Geländemodell, die Abweichungswerte) und vergleicht diese Differenz gegen eine definierte Toleranzgrenze. Jeder einzelne Abweichungswert wird zunächst mit einem Abweichungsschwellwert verglichen, um zu bestimmen, ob die Abweichung in einem Punkt den Schwellwert übersteigt. Sodann wird anschließend die Anzahl derjenigen Punkte ermittelt, die diesen Schwellwert übersteigen. Ist diese Anzahl zu hoch, wird die Messung des ersten Abstandswertes zwischen Luftfahrzeug und Erdoberfläche durch die Radaranlage nicht verwendet, weil eine zu hohe Ungenauigkeit zu erwarten ist.

Alternativ können die Differenzen im Kalman-Filter als erhöhte Ungenauigkeit berücksichtigt werden. Eine unzureichende Übereinstimmung zwischen linearen und nichtlinearen Höhenmodell der Erdoberfläche zeigt eine starke Ondulation (Unebenheit der Geländeoberfläche, Geländerauigkeit) des Geländes an.

Eine zu große Geländerauigkeit lässt eine zu große Varianz bei der Bildung des Residuums aus dem Radarhöhenmesswert und der mathematisch bestimmten kürzesten Entfernung zwischen Flugzeugposition und Geländeoberfläche (in dem Modell) folgen. Die Auswirkungen sind vergleichbar dem systematischen Fehler beim Vergleich der Radarhöhenmesserschrägentfernung (erfasster Abstand durch die Radaranlage zwischen dem Luftfahrzeug und dem nächstliegenden Punkt) und dem vertikalen Abstand zwischen Flugzeug und der Erdoberfläche.

Eine konservative Vorgehensweise würde bei Überschreitung der Toleranzgrenze (der Anzahl der Abweichungswerte, die den Abweichungsschwellwert überschreiten) die aktuell vorhandene Radarhöhenmessung verwerfen oder zu einer Verschlechterung der modellierten Radarhöhengenauigkeit führen. So ist sichergestellt, dass im Kalman-Filter für die Bildung des Residuums, als Basis zur Bestimmung der Korrektur der Kovarianzen und der Systemzustände, nur Radarhöhenmesswerte verwendet werden, bei denen die Abweichung zwischen linearem und nichtlinearem Geländemodell akzeptable ist.

Neben der Bestimmung der Schrägentfernungstoleranz kann auch zusätzlich die Toleranz der Schrägentfernungsrichtung (Normale der Ebene) bestimmt werden. Falls diese Toleranz einen Grenzwert übersteigt kann die Messung auch verworfen werden.

Das Verfahren zeichnet sich dadurch aus, dass eine Schrägentfernung (kürzester Abstand zwischen Flugzeug und Geländeoberfläche) unter Nutzung einer digitalen Geländedatenbank ermittelt und (zusammen mit dem durch die Radaranlage erfassten Abstandswert) für die Bestimmung des Residuums verwendet wird. Daneben wird die Genauigkeit der linearen Abbildung (der Tangentialebene) der Geländeoberfläche überwacht, um eine Toleranzgrenze zwischen dem nichtlinearen und linearen Geländemodell bezüglich Schrägentfernung und Schrägentfernungsrichtung nicht zu überschreiten.

Gemäß einem weiteren Aspekt ist eine Zustandsermittlungseinheit für eine mobile Plattform angegeben. Die Zustandsermittlungseinheit weist auf: einen Datenspeicher zum Vorhalten eines Modells einer Referenzfläche; eine Positionsermittlungseinheit zum Ermitteln der Position der mobilen Plattform bezüglich einer Referenzfläche; und eine Abstandserfassungseinheit zum Erfassen eines Abstands der mobilen Plattform von der Referenzfläche; wobei die Zustandsermittlungseinheit ausgeführt ist, das Verfahren nach einer der oben beschriebenen Ausführungsformen auszuführen.

Die Zustandsermittlungseinheit kann insbesondere einen Prozessor aufweisen, welcher über Schnittstellen mit Sensoren des Luftfahrzeugs sowie einem Modell der Erdoberfläche verknüpft werden kann. Dabei ist der Prozessor ausgeführt, das oben beschriebene Verfahren auszuführen. Die oben beschriebenen Schritte des Verfahrens können dabei als Funktionen des Prozessors implementiert sein. Auch wenn diese Schritte an dieser Stelle nicht einzeln wiederholt sind, ergibt sich, dass diese auf Grund dieses Rückverweises auch in Kombination mit der Zustandsermittlungseinheit offenbart sind.

Der Prozessor kann ein Prozessor sein, welcher Anforderungen an das beabsichtigte Verwendungsumfeld eines Luftfahrzeugs erfüllt. Der Prozessor kann ein Einkern- oder Mehrkernprozessor sein. Die Geländedatenbank kann ein Datenspeicher sein, welcher ausgeführt ist, darin hinterlegte Daten dauerhaft oder über einen längeren Zeitraum von mehreren Jahren zu speichern, auch ohne Verbindung zu einer Energiequelle und auch ohne, dass die Zustandsermittlungseinheit in Betrieb ist.

Gemäß einem weiteren Aspekt ist eine mobile Plattform mit einer Zustandsermittlungseinheit wie oben beschrieben angegeben.

Die mobile Plattform kann ein Luftfahrzeug, ein Landfahrzeug oder ein Wasserfahrzeug sein.

Grundsätzlich kann die Zustandsermittlungseinheit und das Verfahren wie hierin beschrieben in jedem Fahrzeug genutzt werden, in welchem ein Zustand basierend auf Messergebnissen von Sensoren (z.B. dem mit einer Radaranlage erfassten Abstand zu einem Objekt oder einem Punkt der Umgebung) und mit Hilfe einer Abbildung der Umgebung des Fahrzeugs zuverlässig bestimmt werden muss. Bei einem Luftfahrzeug sind der Abstand und die Position/Lage/Orientierung zu der Erdoberfläche relevant. Bei einem Landfahrzeug kann dies die relative Lage mit Bezug zu einem Objekt (Gebäude, Umweltobjekt) sein. Bei einem Wasserfahrzeug kann dies ähnlich dem Luftfahrzeug der Abstand und die relative Lage zu dem Grund des Gewässers oder einem Meeresboden sein, wobei der Grund ebenfalls als Erdoberfläche oder Referenzfläche verstanden werden kann und insofern der Konstellation bei einem Luftfahrzeug ähnelt. Das Wasserfahrzeug kann ein Überwasserfahrzeug (Schiff) oder ein Unterwasserfahrzeug (U-Boot) sein. In beiden Fällen ist es wichtig, einen Abstand zum Grund zu kennen.

### Kurze Beschreibung der Figuren

Im Folgenden werden mit Verweis auf die Figuren Ausführungsbeispiele der Erfindung beschrieben. Darin zeigen:
- Fig. 1: eine schematische Darstellung eines Luftfahrzeugs und einer Referenzfläche gemäß einem Ausführungsbeispiel;
- Fig.2: eine schematische Darstellung eines Luftfahrzeugs und einer Referenzfläche gemäß einem weiteren Ausführungsbeispiel;
- Fig. 3: eine schematische Darstellung einer Zustandsermittlungseinheit gemäß einem weiteren Ausführungsbeispiel;
- Fig.4: eine schematische Darstellung einer Zustandsermittlungseinheit gemäß einem weiteren Ausführungsbeispiel;
- Fig. 5: eine schematische Darstellung der Schritte eines Verfahrens gemäß einem weiteren Ausführungsbeispiel.

### Detaillierte Beschreibung von Ausführungsbeispielen

Die Darstellungen in den Figuren sind schematisch und nicht maßstabsgetreu. Werden in der folgenden Figurenbeschreibung gleiche Bezugsziffern verwendet, so betreffen diese gleiche oder ähnliche Elemente.

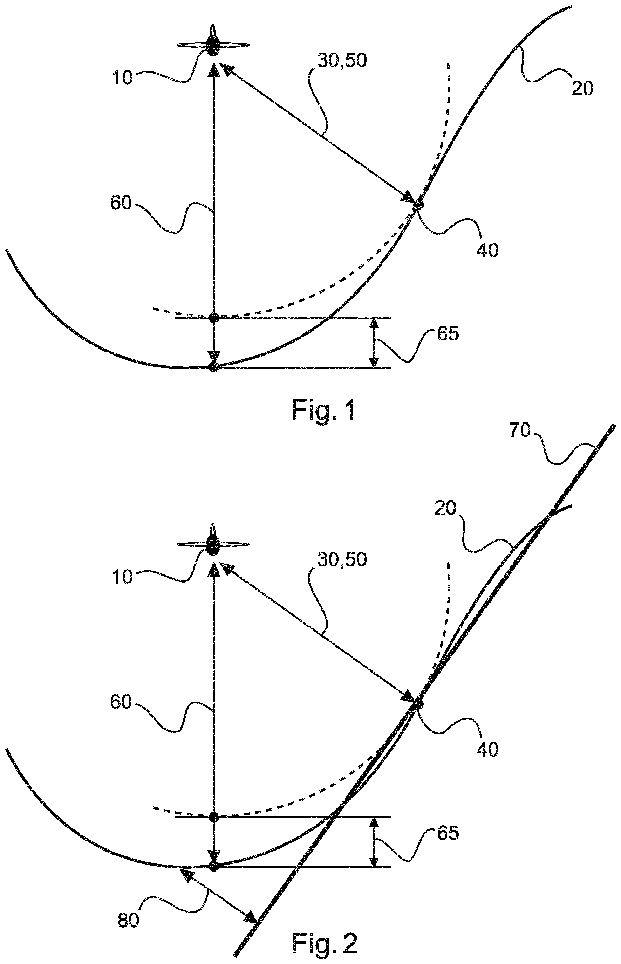

Fig. 1 zeigt eine schematische Darstellung eines Luftfahrzeugs 10 (auch: bewegliche oder mobile Plattform) mit Bezug zu einer Referenzfläche 20. Die Referenzfläche 20 entspricht der Erdoberfläche oder einem Modell hiervon. Für Zwecke des Flugbetriebs des Luftfahrzeugs 10 muss der Zustand des Luftfahrzeugs 10 ermittelt und laufend aktualisiert werden. Dieser Zustand des Luftfahrzeugs kann sich beispielsweise auf eine Lage, Orientierung, Position, Geschwindigkeit, sowie andere Betriebsparameter mit oder ohne Bezug zu der Referenzfläche 20 beziehen.

An Bord des Luftfahrzeugs 10 befindet sich typischerweise eine Radaranlage (in Fig. 1 nicht gezeigt). Die Radaranlage ermittelt in vorgegebenen oder periodischen zeitlichen Intervallen einen ersten Abstandswert 30 zu der Referenzfläche 20. Bei diesem ersten Abstandswert handelt es üblicherweise um den kürzesten Abstand zu der Referenzfläche, da eine Radaranlage systemimmanent das nächstgelegene Objekt innerhalb des Suchwinkelbereichs der Radarkeule 15 (gestrichelte Linien, die von dem Luftfahrzeug 10 ausgehen) erfasst. Im Beispiel der Fig. 1 ist dieser nächstgelegene Punkt der Referenzpunkt 40. Der Referenzpunkt 40 liegt auf der Referenzfläche 20. Kein anderer Bereich der Referenzfläche 20 liegt näher an dem Luftfahrzeug 10, wie an dem gestrichelt dargestellten Kreisbogen ersichtlich ist, welcher mit dem kürzesten Abstand als Radius um das Luftfahrzeug 10 gelegt ist.

Mit Kenntnis des ersten Abstandswert das 30 ist jedoch nur bekannt, wie nahe das Luftfahrzeug 10 irgendeinem Bereich (dem Referenzpunkt 40) der Referenzfläche ist, allerdings ist nicht bekannt wo genau sich das Luftfahrzeug 10 mit Bezug zu der Referenzfläche befindet. Um diese Information zu ermitteln, wird der erste Abstandswert genutzt, um die Position/Lage/Orientierung des Luftfahrzeugs (allgemein: Zustand des Luftfahrzeugs) in einem Modell der Referenzfläche zu ermitteln bzw. eine Abbildung des Luftfahrzeugs in dem Modell nachzuführen bzw. zu aktualisieren. Damit die Abbildung auf dem Laufenden gehalten werden kann, wird eine Position des Luftfahrzeugs 10 in dem Modell ermittelt und ausgehend von dieser ermittelten Position des Luftfahrzeugs in dem Modell ein Abstand zu der Referenzfläche (dies ist der zweite Abstandswert) bestimmt. Der erste Abstandswert und der zweite Abstandswert werden miteinander verglichen und die Differenz zwischen diesen beiden Abstandswert einen dient als Residuum für ein Kalman-Filter.

Zu Zwecken der Veranschaulichung ist in Fig. 1 weiterhin der vertikale Abstand bzw. die vertikale Höhe 60 des Luftfahrzeugs 10 über der Referenzfläche 20 gezeigt. Dabei ist ersichtlich, dass die vertikale Höhe 60 im Falle eines unebenen Geländes deutlich von der kürzesten Distanz zu der Referenzfläche abweicht. Dieser Unterschied zwischen der vertikalen Höhe 60 und dem erfassten kürzesten Abstand 30 kann als systematischer Fehler 65 bezeichnet werden. Um diesen systematischen Fehler zu reduzieren oder sogar vollständig zu eliminieren wird vorliegend vorgeschlagen, dass in dem Modell der Referenzfläche nicht die vertikale Höhe 60 des Luftfahrzeugs bestimmt und für die Ermittlung des Residuums herangezogen wird, sondern dass in dem Modell der Referenzfläche ebenfalls der räumlich kürzeste Abstand zwischen dem Luftfahrzeug 10 und der Referenzfläche 20 ermittelt wird. Dieser kürzeste Abstand kann in dem Modell beispielsweise mithilfe eines 3-dimensionalen Koordinatensystems ermittelt werden, in welchem dem Luftfahrzeug 10 und Punkten der Referenzfläche 20 jeweils einen Koordinatenwert zugewiesen wird. Unabhängig davon, ob der mittels der Radaranlage erfasste Abstandswert (erste Abstandswert 30) dem mittels Berechnung in dem Modell ermittelten Abstandswert (zweiter Abstandswert 55) entspricht, wird durch die Verwendung des zweiten Abstandswerts 55 als kürzestem räumlichen Abstand in dem Modell anstelle der vertikalen Höhe 60 der oben beschriebene systematische Fehler vermieden und das Residuum für das Kalman-Filter wird mit einer höheren Zuverlässigkeit ermittelt.

Fig. 2 zeigt die Darstellung der Fig. 1 ergänzt um die Tangentialebene 70, welche durch den Referenzpunkt 40 verläuft bzw. an diesem anliegt. Die Tangentialebene 70 kann auch als linearisierter Geländebereich oder Linearisierung bezeichnet werden. Diese Linearisierung ist notwendig, um als Eingabewert für das Kalman-Filter verwendet werden zu können. Wie allerdings aus Fig. 2 ersichtlich ist, weist die Tangentialebene 70 an manchen Stellen einen größeren Abstand als an anderen Stellen auf. Dieser Abstand der Tangentialebene 70 von der Referenzfläche 20 kann als Linearisierungsfehler bezeichnet werden.

Bevorzugt liegen die Daten, welche die Referenzfläche 20 in dem Modell beschreiben, in diskreter Form vor, so dass beispielsweise in einem 3-dimensionalen Koordinatensystem zu einzelnen Punkten der Referenzfläche 20 die entsprechenden Koordinaten vorgehalten werden. Die Tangentialebene 70 kann ebenfalls in diskreter Form vorliegen, sie kann aber auch mittels einer mathematischen Gleichung beschrieben sein. Basierend auf diesen Informationen kann für jeden Punkt der Referenzfläche 20 ein Abstand zu der Tangentialebene 70 berechnet werden. Dieser Abstand wird auch als Abweichungswert 80 bezeichnet. Für eine Mehrzahl von Abweichungswert von 80 kann ermittelt werden, wie viele einzelne Werte dieser Mehrzahl von Abweichungswerten einen Schwellwert für den Abstand (die Abweichung der Tangentialebene von der Referenzfläche) überschreiten. Grundsätzlich gilt, dass, je mehr Abweichungswerte bin Schwellwert für den Abstand überschreiten, desto größer ist die Rauheit des Geländes bzw. der Referenzfläche 20 (die Ondulation). Es mag Gründe geben, Messwerte in einem sehr rauen Gelände zu ignorieren, weil die Gefahr von Messfehlern und die Ungewissheit, welchen Punkt der Referenzfläche die Radaranlage erfasst hat, groß sind. Somit würde auch ein Vergleich des erfassten ersten Abstandswertes mit dem in dem Modell ermittelten zweiten Abstandswert möglicherweise einen systematischen Fehler einbringen, weil die Abstände zu unterschiedlichen Punkten der Referenzfläche herangezogen würden.

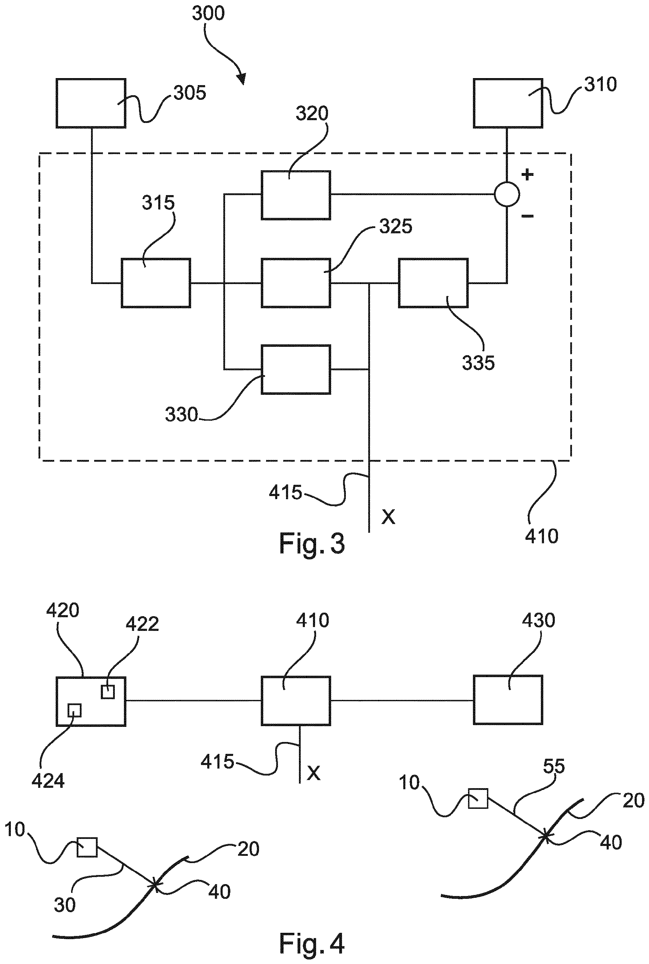

Fig. 3 zeigt eine schematische Darstellung einer Zustandsermittlungseinheit 300, welche Daten von einer Trägheitsnavigationsanlage bzw. einem Trägheitsnavigationssystem 305 sowie einer Radaranlage 310 erhält, um einen Zustand eines Luftfahrzeugs oder einer anderen beweglichen Plattform in einem Modell nachzuführen bzw. zu aktualisieren. Die Zustandsermittlungseinheit 300 ist von ihrem grundsätzlichen Aufbau her an die Architektur des Luenberger Beobachters angelehnt.

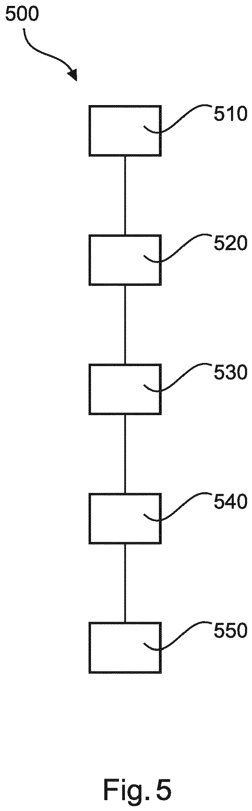

Die Zustandsermittlungseinheit 300 weist eine Recheneinheit 410 dargestellt mit einer gestrichelten Linie auf. Die Recheneinheit 410 kann beispielsweise ein Prozessor sein, welcher Instruktionen ausführen kann. Die Recheneinheit 410 enthält verschiedene funktionale Module. Diese funktionalen Module können als Hardware-Module oder Software-Module oder Kombination hieraus implementiert sein. Die Recheneinheit 410 ist ausgeführt, das hierin beschriebene Verfahren bzw. dessen Schritte (siehe auch Fig. 5) auszuführen.

Eine bewegliche Plattform bewegt sich in einer realen Umgebung. Die Bewegung der beweglichen Plattform kann mit dem Trägheitsnavigationssystem 305 erfasst werden. Ebenso kann mittels der Radaranlage 310 eine relative Position der beweglichen Plattform zu der Umgebung (im Falle eines Luftfahrzeugs ist dies beispielsweise die Erdoberfläche bzw. die oben beschriebene Referenzfläche 20) erfasst werden. Mit diesen beiden Informationen kann die Position und/oder ein Zustand der beweglichen Plattform in einer Abbildung der realen Umgebung nachgeführt und aktualisiert werden. Zum Zwecke der Aktualisierung des Modells werden die von dem Trägheitsnavigationssystem 305 empfangenen Daten über eine Bewegung der beweglichen Plattform einer Eingangsmatrix 315 zugeführt. Die von der Radaranlage 310 erfassten ersten Abstandswerte werden ebenfalls der Recheneinheit 410 zugeführt. Die Recheneinheit 410 ermittelt eine Differenz zwischen einem ersten Abstandswert von der Radaranlage und einem zweiten Abstandswert, welcher basierend auf dem Modell der Realität und einer Position der beweglichen Plattform in diesem Modell ermittelt wurde. Diese Differenz wird einem Kalman-Filter 320 als Residuum zugeführt und dient dazu, die Position der beweglichen Plattform und seinen Zustand in dem Modell der Realität nachzuführen.

Für die Regelung dynamischer Systeme mit Hilfe der Zustandsregelung ist die Messbarkeit aller Zustandsgrößen der Regelstrecke eine Voraussetzung. In realen Systemen ist es oftmals gar nicht oder nur durch einen erhöhten Aufwand möglich, alle Zustandsgrößen messtechnisch zu erfassen.

Der Luenberger-Beobachter (Zustandsbeobachter) ermöglicht es, nicht messbare oder nur aufwändig messbare Zuständen eines dynamischen Systems zu rekonstruieren. Zu diesem Zweck wir ein Modell des Systems parallel zu einem realen dynamischen System geführt bzw. aktuell gehalten.

Das dynamische Verhalten eines realen Systems wird in der Zustandsraumdarstellung durch zwei Gleichungen, nämlich der sog. Zustandsdifferentialgleichung und der Ausgangsgleichung, beschrieben. Fig.3 zeigt schematisch und in einem Beispiel die Verknüpfung der Zustandsgrößen, der Eingangsgrößen (Modul 315) und der Ausgangsgrößen (Modul 335) einer Zustandsdifferentialgleichung und einer Ausgangsgleichung in einer Zustandsraumdarstellung.

Die Dynamik des realen Systems ist in der Systemmatrix (Modul 330) nachgebildet. Die Systemmatrix (Modul 330) beschreibt die zeitliche Änderung der einzelnen Parameter des Zustandsvektors x. Die Lösung der Zustandsdifferentialgleichung erfolgt im Integrator (Modul 325).

Insgesamt liefert die Zustandsermittlungseinheit 300 einen Ausgabewert 415, welcher den Zustand der beweglichen Plattform in dem Modell angibt. Dieser Ausgabewert 415 enthält zu jedem Schritt des Verfahrens einen aktualisierten (neuen) Zustandsvektor x, beispielsweise mit den Parametern Position, Lage, Geschwindigkeit, etc. Die Zusammensetzung des Zustandsvektors entspricht den in der Systemmatrix 330 modellierten Parametern.

Die Funktionalität der in Fig. 3 gezeigten Zustandsermittlungseinheit 300 kann weiter wie folgt beschrieben werden: Der Integrator (Modul 325) löst die Zustandsdifferentialgleichung. Die neuen, aktualisierten Werte aller Zustände sind jetzt bekannt und können für die verschiedensten Anwendungen genutzt werden. Der Zustandsvektor beinhaltet am Ausgang des Moduls 325 konkrete Werte für die Parameter des Zustandsvektors, z.B. über die Zustände Geschwindigkeit oder Position etc. Aus diesen Werte des Zustandsvektors kann in der Messmatrix 335 der Wert für die kürzeste Entfernung zwischen Flugzeug und Gelände berechnet werden.

Der gesamte Zustandsvektor mit all seinen Parametern kann mit nur einem einzigen Messwert (z.B. resultierend aus einem Radarhöhenmesser) korrigiert werden. Dies wird als Rekonstruktion des Zustandsvektors bezeichnet. Dass ein einzelner Messwert ausreicht, ist durch die Systemmatrix 330 sichergestellt. Hier ist die mathematische Verknüpfung zwischen Radarhöhenmesswert sowie Position, Geschwindigkeit oder Lage etc. beschrieben bzw. moduliert.

Fig. 4 zeigt eine beispielhafte Darstellung der Zustandsermittlungseinheit 300. Die Recheneinheit 410 ist einerseits mit einer Gruppe von Sensoren 420 und andererseits mit einem Datenspeicher 430 jeweils über geeignete Schnittstellen gekoppelt. Die Gruppe von Sensoren 420 enthält beispielsweise eine Positionsermittlungseinheit 422 und eine Abstandserfassungseinheit 424. Die Positionsermittlungseinheit 422 ist beispielsweise eine satellitengestützte Navigationsanlage, um eine Position der beweglichen Plattform mit Bezug zu der Umgebung der beweglichen Plattform zu bestimmen. Die Abstandserfassungseinheit 424 kann als Radaranlage 310 (siehe Fig. 3) implementiert sein.

Die Sensoren 420 dienen dazu, eine Position der beweglichen Plattform relativ zu der Umgebung zu bestimmen. Beispielsweise bestimmen die Sensoren 420 den ersten Abstandswert 30 als kürzesten Abstand zwischen der beweglichen Plattform 10 und der Referenzfläche 20, wobei der kürzeste Abstand sich auf einen Referenzpunkt 40 bezieht, welcher der beweglichen Plattform 10 am nächsten liegt. Diese Beziehung ist angedeutet durch eine schematische Darstellung der beweglichen Plattform 10 sowie der Referenzfläche 20 unterhalb des Rechtecks, welches die Sensoren 420 darstellt. Bei dieser Darstellung handelt es sich um die reale Umgebung.

In dem Datenspeicher 430 wird eine Abbildung der Umgebung bzw. ein Modell der Realität vorgehalten, welches beispielsweise eine Geländedatenbank mit Informationen über die Struktur eines Geländeabschnitts oder Teils der Erdoberfläche ist. Die Recheneinheit 410 ist ausgeführt, eine Position und einen Zustand der beweglichen Plattform 10 mit Bezug zu dem Modell der Realität zu aktualisieren und vorzuhalten. In anderen Worten wird in diesem Modell angezeigt, wo und wie die bewegliche Plattform mit Bezug zu dem Modell der Realität angeordnet ist. Diese modellhafte Abbildung ist ebenfalls durch eine schematische Darstellung der beweglichen Plattform 10 sowie der Referenzfläche 20, welches den Datenspeicher 430 darstellt, angedeutet. In dem Modell bzw. mit Hilfe des Modells wird der zweite Abstandswert 55 ermittelt, welcher ebenfalls den räumlich kürzesten Abstand zwischen der beweglichen Plattform 10 und der Referenzfläche 20 angibt.

Der erste Abstandswert 30, welcher in der Realität erfasst wurde, und der zweite Abstandswert 55, welcher in dem Modell der Realität ermittelt wurde, werden miteinander verglichen, um ein Residuum für ein Kalman-Filter anzugeben, wobei das Residuum dazu dient, die Abbildung der Realität bzw. das Modell der Realität zu aktualisieren.

Fig. 5 zeigt eine schematische Darstellung der Schritte eines Verfahrens 500 zum Ermitteln eines Zustands einer beweglichen Plattform bezüglich einer Referenzfläche.

In einem ersten Schritt 510 wird ein erster Abstandswert 30 zwischen der beweglichen Plattform 10 und der Referenzfläche 20 erfasst. In einem zweiten Schritt 520 wird ein zweiter Abstandswert 55 zwischen der beweglichen Plattform 10 und der Referenzfläche 20 basierend auf einem Modell der Referenzfläche und einer Position der beweglichen Plattform relativ zu der Referenzfläche ermittelt. In einem dritten Schritt 530 wird eine Differenz zwischen dem ersten Abstandswert 30 und dem zweiten Abstandswert 55 bestimmt. In einem vierten Schritt 540 wird die Differenz als Residuum verwendet und das Residuum bewertet, um eine Abbildung eines Zustands der beweglichen Plattform an den tatsächlichen Zustand der beweglichen Plattform anzugleichen. In einem fünften Schritt 550 wird ein Referenzpunkt 40 der Referenzfläche in dem Modell der Referenzfläche basierend auf der Position der beweglichen Plattform bezüglich des Modells der Referenzfläche bzw. in der Abbildung der Realität ermittelt, wobei der Referenzpunkt von der beweglichen Plattform den geringsten Abstand zwischen der Referenzfläche und der beweglichen Plattform aufweist.

Um den zweiten Abstandswert in dem Modell der Realität ermitteln zu können, ist die Position der beweglichen Plattform notwendig. Diese Position wird von einer Positionsermittlungseinheit ermittelt und bereitgestellt. Damit kann die Position genutzt werden, um in dem Modell der Realität ausgehend von der Position der beweglichen Plattform den zu dieser Position nächstgelegenen Punkt der Referenzfläche zu ermitteln.

Beispielsweise kann es sich bei der Position der beweglichen Plattform um Koordinaten in einem Koordinatensystem handeln. Die Position kann beispielsweise in einem Koordinatensystem der Erde angegeben werden.

Das Verfahren kann besonders vorteilhaft in einem Luftfahrzeug verwendet werden, um die Entwicklung des Abstands des Luftfahrzeugs zu der Erdoberfläche zu schätzen bzw. zu propagieren. Es ist ein besonderer Aspekt, dass der gemessene oder erfasste kürzeste Abstand zwischen Luftfahrzeug und Erdoberfläche sowie der mittels eines Modells der Erdoberfläche und der Position des Luftfahrzeugs ermittelte kürzeste Abstand miteinander verglichen werden. Sodann kann ein Referenzpunkt auf der Erdoberfläche bestimmt werden, welcher den kürzesten Abstand zu dem Luftfahrzeug aufweist. Dieser Referenzpunkt wird genutzt, um eine Tangentialebene daran zu legen, um sodann die Tangentialebene wie hierin beschrieben als Grundlage für die Schätzung der Entwicklung des Abstands des Luftfahrzeugs zu der Erdoberfläche heranzuziehen, soweit die Tangentialebene als hinreichend genaue Abbildung der Erdoberfläche bzw. eines Bereichs der Erdoberfläche (zumindest innerhalb des Suchwinkelbereichs des Radars) betrachtet werden darf, wenn also der Abstand zwischen der Erdoberfläche und der Tangentialebene an weniger als einer vorgegebenen Anzahl von Punkten einen vorgegebenen Abstandswert oder Abweichungswert überschreitet.

### Liste der Bezugszeichen

- 10: bewegliche Plattform
- 15: Radarkeule
- 20: Referenzfläche
- 30: erster Abstandwert
- 40: Referenzpunkt
- 50: Verbindungslinie zwischen beweglicher Plattform und Referenzpunkt
- 55: zweiter Abstandswert
- 60: vertikale Höhe
- 65: systematischer Fehler
- 70: Tangentialebene
- 80: Abweichungswert
- 300: Zustandsermittlungseinheit
- 305: Trägheitsnavigationssystem
- 310: Radaranlage
- 315: Eingangsmatrix
- 320: Kalman-Filter
- 325: Summierer, Integrierer
- 330: Systemdynamik-Matrix
- 335: Mess-Matrix, Steuereinheit für Radaranlage
- 410: Recheneinheit, Prozessor
- 415: Ausgabe
- 420: Sensoren
- 422: Positionsermittlungseinheit
- 424: Abstandserfassungseinheit
- 430: Datenspeicher

## Patentansprüche

1. Verfahren (500) zum Ermitteln eines Zustands einer beweglichen Plattform bezüglich einer Referenzfläche, das Verfahren aufweisend die Schritte:
Erfassen (510) eines ersten Abstandswertes (30) zwischen der beweglichen Plattform (10) und der Referenzfläche (20), wobei der erste Abstandswert der geringste Abstand zwischen der beweglichen Plattform und der Referenzfläche ist;
Ermitteln (520) eines zweiten Abstandswertes (55) zwischen der beweglichen Plattform (10) und der Referenzfläche (20) basierend auf einem Modell der Referenzfläche und einer Position der beweglichen Plattform relativ zu der Referenzfläche, wobei der zweite Abstandswert (55) den geringsten Abstand zwischen der Referenzfläche und der beweglichen Plattform aufweist;
Bestimmen (530) einer Differenz zwischen dem ersten Abstandswert (30) und dem zweiten Abstandswert (55);
Verwenden (540) der Differenz als Residuum und Bewerten des Residuums, um eine Abbildung eines Zustands der beweglichen Plattform an den Zustand der beweglichen Plattform anzugleichen;
Ermitteln (550) eines Referenzpunktes (40) der Referenzfläche in dem Modell der Referenzfläche basierend auf der Position der beweglichen Plattform bezüglich des Modells der Referenzfläche, wobei der Referenzpunkt von der beweglichen Plattform den geringsten Abstand zwischen der Referenzfläche und der beweglichen Plattform aufweist;
**dadurch gekennzeichnet, dass** das Verfahren weiterhin den folgenden Schritt aufweist:
Bestimmen einer Tangentialebene (70), welche an dem Referenzpunkt (40) anliegt, so dass eine Verbindungslinie (50) zwischen der beweglichen Plattform und dem Referenzpunkt die Tangentialebene senkrecht schneidet, wodurch die Tangentialebene ausgehend von dem Referenzpunkt als Näherung für die Oberfläche der Referenzfläche bereitgestellt wird.

2. Verfahren (500) nach Anspruch 1,
weiterhin aufweisend den Schritt:
Vergleichen der Tangentialebene (70) mit dem Modell der Referenzenfläche (20) in einem vorgegebenen Bereich des Modells der Referenzfläche.

3. Verfahren (500) nach Anspruch 2,
weiterhin aufweisend den Schritt:
Bestimmen jeweils eines Abweichungswertes (80) zwischen dem Modell der Referenzfläche (20) und der Tangentialebene (70) für jeden Punkt einer Vielzahl von vorgegebenen Punkten in dem Modell der Referenzfläche.

4. Verfahren (500) nach Anspruch 3,
weiterhin aufweisend die Schritte:
Bestimmen der Anzahl von Abweichungswerten zwischen dem Modell der Referenzfläche und der Tangentialebene, die einen vorgegebenen Abweichungsschwellwert überschreiten;
Verwerfen des erfassten ersten Abstandswertes, wenn die Anzahl der Abweichungswerte, die den vorgegebenen Abweichungsschwellwert übersteigen, einen vorgegebenen Schwellwert für diese Anzahl übersteigt.

5. Verfahren (500) nach einem der vorhergehenden Ansprüche,
wobei die genannten Schritte in einem sich wiederholenden Vorgang ausgeführt werden, solange die bewegliche Plattform in Bewegung ist.

6. Verfahren (500) nach einem der vorhergehenden Ansprüche,
wobei der erste Abstandswert zwischen der beweglichen Plattform und der Referenzfläche mittels einer Radaranlage (424) erfasst wird.

7. Verfahren (500) nach einem der vorhergehenden Ansprüche,
wobei die bewegliche Plattform (10) ein Luftfahrzeug ist;
wobei die Referenzfläche (20) die Erdoberfläche ist; und
wobei das Modell der Referenzfläche eine Geländedatenbank ist.

8. Zustandsermittlungseinheit (300) für eine mobile Plattform (10), die Zustandsermittlungseinheit aufweisend:
einen Datenspeicher (430) zum Vorhalten eines Modells einer Referenzfläche;
eine Positionsermittlungseinheit (422) zum Ermitteln der Position der mobilen Plattform bezüglich einer Referenzfläche;
eine Abstandserfassungseinheit (424) zum Erfassen eines Abstands der mobilen Plattform von der Referenzfläche;
wobei die Zustandsermittlungseinheit (300) ausgeführt ist, das Verfahren nach einem der Ansprüche 1 bis 7 auszuführen.

9. Mobile Plattform (10) mit einer Zustandsermittlungseinheit (300) nach Anspruch 8.

10. Mobile Plattform (10) nach Anspruch 9,
wobei die mobile Plattform ein Luftfahrzeug, ein Landfahrzeug oder ein Wasserfahrzeug ist.

## Claims

1. Method (500) for ascertaining a state of a moving platform in relation to a reference surface, the method having the steps of:
capturing (510) a first distance value (30) between the moving platform (10) and the reference surface (20),
wherein the first distance value is the shortest distance between the moving platform and the reference surface;
ascertaining (520) a second distance value (55) between the moving platform (10) and the reference surface (20) on the basis of a model of the reference surface and a position of the moving platform relative to the reference surface, wherein the second distance value (55) has the shortest distance between the reference surface and the moving platform;
determining (530) a difference between the first distance value (30) and the second distance value (55);
using (540) the difference as a residuum and rating the residuum in order to align a depiction of a state of the moving platform with the state of the moving platform;
ascertaining (550) a reference point (40) on the reference surface in the model of the reference surface on the basis of the position of the moving platform in relation to the model of the reference surface, wherein the reference point has the shortest distance between the reference surface and the moving platform from the moving platform;
**characterized in that** the method furthermore has the following step:
determining a tangential plane (70) adjacent to the reference point (40), so that a connecting line (50) between the moving platform and the reference point intersects the tangential plane at right angles, as a result of which the tangential plane, starting from the reference point, is provided as an approximation of the surface of the reference surface.

2. Method (500) according to Claim 1,
furthermore having the step of:
comparing the tangential plane (70) with the model of the reference surface (20) in a prescribed region of the model of the reference surface.

3. Method (500) according to Claim 2,
furthermore having the step of:
determining a respective disparity value (80) between the model of the reference surface (20) and the tangential plane (70) for each point from a multiplicity of prescribed points in the model of the reference surface.

4. Method (500) according to Claim 3,
furthermore having the steps of:
determining the number of disparity values between the model of the reference surface and the tangential plane that exceed a prescribed disparity threshold value;
rejecting the captured first distance value if the number of disparity values that exceed the prescribed disparity threshold value exceeds a prescribed threshold value for this number.

5. Method (500) according to one of the preceding claims,
wherein the cited steps are carried out in a repeating process while the moving platform is in motion.

6. Method (500) according to one of the preceding claims,
wherein the first distance value between the moving platform and the reference surface is captured by means of a radar installation (424).

7. Method (500) according to one of the preceding claims,
wherein the moving platform (10) is an aircraft;
wherein the reference surface (20) is the earth's surface; and
wherein the model of the reference surface is a terrain database.

8. State ascertainment unit (300) for a mobile platform (10), the state ascertainment unit having:
a data memory (430) for keeping a model of a reference surface;
a position ascertainment unit (422) for ascertaining the position of the mobile platform in relation to a reference surface;
a distance detection unit (424) for detecting a distance of the mobile platform from the reference surface;
wherein the state ascertainment unit (300) is designed to carry out the method according to one of Claims 1 to 7.

9. Mobile platform (10) having a state ascertainment unit (300) according to Claim 8.

10. Mobile platform (10) according to Claim 9,
wherein the mobile platform is an aircraft, a land vehicle or a watercraft.

## Revendications

1. Procédé (500) pour déterminer un état d'une plate-forme mobile par rapport à une surface de référence, le procédé comprenant les étapes suivantes :
acquisition (510) d'une première valeur d'écart (30) entre la plate-forme (10) mobile et la surface de référence (20), la première valeur d'écart étant le plus petit écart entre la plate-forme mobile et la surface de référence ;
identification (520) d'une deuxième valeur d'écart (55) entre la plate-forme (10) mobile et la surface de référence (20) en se basant sur un modèle de la surface de référence et une position de la plate-forme mobile par rapport à la surface de référence, la deuxième valeur d'écart (55) représentant le plus petit écart entre la surface de référence et la plate-forme mobile ;
détermination (530) d'une différence entre la première valeur d'écart (30) et la deuxième valeur d'écart (55) ;
utilisation (540) de la différence en tant que résidu et évaluation du résidu en vue d'aligner une représentation d'un état de la plate-forme mobile sur l'état de la plate-forme mobile ;
identification (550) d'un point de référence (40) de la surface de référence dans le modèle de la surface de référence en se basant sur la position de la plate-forme mobile par rapport au modèle de la surface de référence, le point de référence possédant, par rapport à la plate-forme mobile, le plus petit écart entre la surface de référence et la plate-forme mobile ;
**caractérisé en ce que** le procédé comprend en plus l'étape suivante :
détermination d'un plan tangentiel (70) qui repose contre le point de référence (40), de sorte qu'une ligne de liaison (50) entre la plate-forme mobile et le point de référence croise le plan tangentiel perpendiculairement, moyennant quoi le plan tangentiel émanant du point de référence est fourni en tant qu'approximation pour la surface de la surface de référence.

2. Procédé (500) selon la revendication 1, comprenant en outre l'étape suivante :
comparaison du plan tangentiel (70) avec le modèle de la surface de référence (20) dans une zone prédéfinie du modèle de la surface de référence.

3. Procédé (500) selon la revendication 2, comprenant en outre l'étape suivante :
détermination respectivement d'une valeur d'écart (80) entre le modèle de la surface de référence (20) et le plan tangentiel (70) pour chaque point d'une pluralité de points prédéfinis dans le modèle de la surface de référence.

4. Procédé (500) selon la revendication 3, comprenant en outre l'étape suivante :
détermination du nombre de valeurs d'écart entre le modèle de la surface de référence et le plan tangentiel qui dépassent une valeur de seuil d'écart prédéfinie ;
rejet de la première valeur d'écart acquise lorsque le nombre de valeurs d'écart qui dépassent la valeur de seuil d'écart prédéfinie dépasse une valeur de seuil prédéfinie pour ce nombre.

5. Procédé (500) selon l'une des revendications précédentes, les étapes mentionnées étant exécutées dans un processus répétitif tant que la plate-forme mobile est en mouvement.

6. Procédé (500) selon l'une des revendications précédentes, la première valeur d'écart entre la plate-forme mobile et la surface de référence étant acquise au moyen d'un équipement radar (424).

7. Procédé (500) selon l'une des revendications précédentes,
la plate-forme mobile (10) étant un aéronef ;
la surface de référence (20) étant la surface terrestre ; et
le modèle de la surface de référence étant une base de données de terrains.

8. Unité d'identification d'état (300) pour une plate-forme mobile (10), l'unité d'identification d'état possédant :
une mémoire de données (430) destinée à conserver un modèle d'une surface de référence ;
une unité d'identification de position (422) destinée à identifier la position de la plate-forme mobile par rapport à une surface de référence ;
une unité de détection d'écart (424) destinée à détecter un écart entre la plate-forme mobile et la surface de référence ;
l'unité d'identification d'état (300) étant exécutée pour mettre en œuvre le procédé selon l'une des revendications 1 à 7.

9. Plate-forme mobile (10) comprenant une unité d'identification d'état (300) selon la revendication 8.

10. Plate-forme mobile (10) selon la revendication 9, la plate-forme mobile étant un aéronef, un véhicule terrestre ou un véhicule nautique.
